# EUROPÄISCHE PATENTANMELDUNG

(11) **EP 1 124 192 A1**
(43) Veröffentlichungstag der Anmeldung: **16.08.2001**
(21) Anmeldenummer: 00101958.7
(22) Anmeldetag: 01.02.2000
(51) Int. Cl.: G06F 17/60

(54) **Standardisierter Austausch von Daten im elektronischen Geschäftsverkehr**

(71) Anmelder: peraro technologies ag, 9470 Buchs (CH)
(72) Erfinder: Rupf, Achilles, 7320 Sargans (CH)
(74) Vertreter: Rupp, Christian, Dipl.Phys.

(57) **Zusammenfassung**

Für den automatisierten elektronischen Austausch von geschäftsrelevanten Daten in einer Netzwerkumgebung, wie beispielsweise dem Internet (9) werden das interne EDV-System (2) und die Internetdatenbank (3) des Verkäufers (1) eines Online-Shops sowie die interne EDV (6) und die interne/externe Datenbank (7) eines Käufers (5) jeweils mit einem Konvertierungsmodul (4 bzw. 8) versehen, die die ausgetauschten Daten von der internen EDV (2 bzw. 6) in einen Datenaustausch-Standard umsetzen. Somit wird eine Anbindung einer internen EDV (6) mittels der Konvertierungsmodule (4 bzw. 8) und dem Internet (9) mit der EDV (2) des Verkäufers (1) als Betreiber eines Online-Shops geschaffen.

## Beschreibung

Die vorliegende Erfindung bezieht sich auf ein Verfahren zum automatisierten Austausch von Daten zwischen einem anbietenden und nachfragenden Teilnehmer in einer Netzwerkumgebung, auf ein Verfahren zum automatisierten Austausch von Daten zwischen einem anbietenden und einem abnehmenden Teilnehmer in einer Netzwerkumgebung, auf ein Softwareprodukt zur Implementierung eines solchen Verfahrens, auf einen Rechner in einer Netzwerkumgebung, der zur Ausführung eines solchen Verfahrens konfiguriert ist sowie auf eine grafische Bedieneroberfläche, die die Ausführung eines solchen Verfahrens ermöglicht.

Wie bereits gesagt ist das technische Umfeld der vorliegenden Erfindung der Datenaustausch im elektronischen Geschäftsverkehr über ein Netzwerk, wie beispielsweise das Internet. In den meisten Unternehmen werden Information über Kunden, Lieferanten, Waren, Bestellungen, Produktionsprozesse, Rechnungen, etc. elektronisch mit speziellen betrieblichen (internen) EDV-Lösungen verarbeitet. Dementsprechende Lösungen werden beispielsweise von SAP vertrieben. Auf der anderen Seite kann im Internet weltweit elektronisch kommuniziert werden und Informationen können daher angeboten und abgefragt werden. Immer mehr Privatpersonen und Unternehmen nützen dies. Bereits zum heutigen Zeitpunkt können über das Internet Preise verglichen und in sogenannten Online-Shops (elektronischen Läden) Güter bestellt und gekauft werden. Solche Online-Shops sind meistens mit der normalen betrieblichen EDV-Lösung des Verkäufers verbunden.

Für eine weitere Verbreitung des elektronischen Austauschs von Geschäftsverkehrsdaten über das Internet ist es unerläßlich, eine Standardisierung für einen solchen Austausch festzulegen.

WDDX (Web Distributed Data Exchange) ist ein bereits heute bestehender Standard für die einheitliche elektronische Speicherung einzelner Daten. Gemäß diesem Standard können Daten generisch zwischen verschiedenen Anwendungen bewegt werden, wobei sie weiterhin in ihrem Kontext verfügbar bleiben. WDDX baut dabei auf XML auf, das wiederum auf HTTML aufbaut. Zur kurzen Erläuterung dieses WDDX-Standards sei zuerst angenommen, daß eine gesammelte Benutzerinformation (Vorname, Nachnahme, Geburtsdatum) wiedergegeben werden soll. Eine solche Information taucht in einer Vielzahl von Anwendungen auf. Die oben genannte Kombination an Informationen wird gemäß WDDX in einem "Paket" wiedergegeben. WDDX-Strukturen werden allgemein Pakete genannt, da die XML-Wiedergabe von Daten allgemein nur als eine Größe in dem Raum zwischen Anwendungen Bedeutung hat.

Die oben genannten Daten würden in sämtlichen Programmiersprachen aus zwei Strings und einem Datum bestehen. Jede Variante besteht aus einem Paar Namen/Wert. Diese Beziehung des Namen/Wert-Paars gibt dem Paket seine Struktur.

Eine Wiedergabe einer Instanz dieser Daten kann beispielsweise wie folgt aussehen:
< wddxPacket version= "0.9" >
< header >
</header>
<data>
< var name = "firstname">
< string > Joseph
</var>
<var name = "lastname">
< string > Josephson
</var>
<var name = "birthdate">
<datetime> 12/12/67
</var>
</data>
</wddxPacket>

Komplizierter wird es, wenn ein Bündel von Informationen von verschiedenen Personen übertragen werden soll und die Beziehung zwischen sämtlichen Vornamen, Nachnamen und Geburtsdaten aufrechterhalten werden soll. Dazu müssen die Daten wie folgt strukturiert werden:
< data >
< struct >
<var name = "friends">>
<array length = 2>
< array length = 3 >
<string> Joseph
< string > Josephson
<datetime> 12/12/67
</array>
< array length = 3>
< string > Ben
< string > Benson
<datetime> 11/11/27
</array>
</array>
</var>
</struct>
</data>

Somit wird eine zweidimensionale Matrix mit drei Feldern geschaffen, die in sämtlichen Sprachen verwendet werden können, solange diese Sprachen ihre eigenen Strukturen in WDDX (und umgekehrt) umsetzen können.

Es ist Aufgabe der vorliegenden Erfindung, eine Technik bereitzustellen, die den Austausch von Geschäftsdaten im elektronischen Geschäftsverkehr unabhängig von dem internen EDV-System der am Austausch beteiligten Teilnehmer des Netzwerks ermöglicht.

Insbesondere soll es durch die vorliegende Erfindung möglich werden, die innerbetriebliche EDV-Lösung eines potentiellen Käufers über das Netzwerk elektronisch mit dem EDV-System des Verkäufers zu verbinden. Soweit es im Stand der Technik bereits Ansätze zu einer solchen Lösung gibt, sind sie in der Regel auf eine spezielle EDV-Lösung und somit auch auf mit dieser EDV-Lösung arbeitende Unternehmen beschränkt. Durch die erfindungsgemäße Technik kann somit vermieden werden, daß in Informationen doppelt erfaßt werden müssen und daß elektronische Bestellungen mehr Zeit in Anspruch nehmen als solche, die beispielsweise fernmündlich übermittelt werden. Das Personal kann sich somit auf seine eigentlichen Aufgaben wie beispielsweise die Betreuung der Kunden konzentrieren und benötigt somit weniger Zeit für die Eingabe und Suche von Daten.

Die oben genannte Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Erfindungsgemäß ist also ein Verfahren zum automatisierten Austausch von Daten zwischen Teilnehmern in einer Netzwerkumgebung vorgesehen. Diese Teilnehmer können beispielsweise ein anbietender und ein nachfragender Teilnehmer sein. Eine Anfrage wird durch das interne EDV-System des nachfragenden Teilnehmers ausgegeben. Diese Anfrage wird durch ein Konvertierungsmodul des anfragenden Teilnehmers in ein standardisiertes (plattformunabhängiges) Format umgesetzt. Die Anfrage des anfragenden Teilnehmers wird dann in dem standardisierten Format über das Netzwerk übertragen. Ein Konvertierungsmodul des anbietenden Teilnehmers empfängt die Anfrage und setzt sie von dem standardisierten, plattformunabhängigen Format in das Format um, das das interne EDV-System des anbietenden Teilnehmers zur Weiterverarbeitung bzw. Speicherung benötigt. Die Anfrage kann dann in dem internen EDV-System des anbietenden Teilnehmers weiterverarbeitet werden. Der obige Zyklus stellt somit einen Datenaustausch für einen elektronischen Geschäftsverkehr dar, der zwischen zwei Teilnehmers unabhängig von den in den jeweiligen internen EDV-Systemen der Teilnehmer installierten Plattformen ausgeführt werden kann.

Für den Fall, daß das interne EDV-System des anbietenden Teilnehmers feststellt, daß die Anfrage durch den anfragenden Teilnehmer nicht oder nur zum Teil erfüllt werden kann, kann das EDV-System des anbietenden Teilnehmers automatisch eine weitere (eigene) Anfrage mittels des Konvertierungsmodul des anbietenden Teilnehmers und dem Netzwerk ausgeben. Somit ergibt sich ein Anfrage/Angebots-Zyklus, der vollautomatisch elektronisch beispielsweise über das Internet abgewickelt werden kann.

Die Erfindung betrifft weiterhin ein Verfahren zur automatischen Beurteilung der Kreditwürdigkeit, bei dem der zweiten Teilnehmer ein Kreditinstitut und der erste Teilnehmer ein Kunde ist, der bei dem Kreditinstitut um einen Kredit nachfragt. Die Anfrage enthält für eine automatische Beurteilung der Kreditwürdigkeit notwendigen Informationen in einem standardisierten Paket.

Die Beurteilung der Kreditwürdigkeit kann durch das EDV-System des Kreditinstituts automatisch anhand der Informationen in dem standardisierten Paket erfolgen.

Für den Fall, daß die automatische Beurteilung ergibt, daß kein eindeutiger Fall vorliegt, kann eine Anzeige erfolgen, daß ein Mitarbeiter eingeschaltet werden muß.

Gemäß einem weiteren Aspekt der vorliegenden Erfindung ist ein Verfahren zum automatisierten Austausch von Daten zwischen einem anbietenden und einem abnehmenden Teilnehmer in einer Netzwerkumgebung vorgesehen. Dabei wird durch ein internes EDV-System des anbietenden Teilnehmers ein Angebot ausgegeben. Das Angebot wird durch ein Konvertierungsmodul des anbietenden Teilnehmers in ein standardisiertes (plattformunabhängiges) Format umgesetzt. Die Anfrage des anbietenden Teilnehmers wird dann in dem standardisierten Format über das Netzwerk, wie beispielsweise das Internet) übertragen. Das Angebot wird schließlich durch ein Konvertierungsmodul des abnehmenden Teilnehmers empfangen.

Das Angebot kann durch den abnehmenden Teilnehmer von dem standardisierten Format in ein Format umgesetzt werden, das zur Weiterverarbeitung durch ein internes EDV-System des abnehmenden Teilnehmers geeignet ist. Daraufhin kann das Angebot in dem internen EDV-System des abnehmenden Teilnehmers weiterverarbeitet und/oder gespeichert werden.

Der anbietende Teilnehmer kann beispielsweise ein Online-Shop und das Netzwerk das Internet sein. Der abnehmende Teilnehmer kann ein potentieller Käufer sein.

Somit können sämtliche zum Kauf eines Produktes jeweils durch das interne EDV-System der beteiligten Teilnehmer benötigte Informationen automatisch ausgetauscht werden.

Das Konvertierungsmodul kann insbesondere jeweils in der Art eines Internet-Servers konfiguriert und dementsprechend adressierbar sein.

In einem ersten Modus können die empfangenen Daten beispielsweise nur betrachtet, aber in dem internen EDV-System des Empfängers nicht weiterverarbeitet und/oder gespeichert werden. In einem zweiten Modus, der beispielsweise Mitgliedern eines bestimmten Systems vorbehalten sein kann, können die empfangenen Daten dann in dem internen EDV-System des Abnehmers weiterverarbeitet und/oder gespeichert werden.

Es gibt verschiedene Möglichkeiten, wie ein Teilnehmer einen weiteren Teilnehmer, der ein Konvertierungsmodul aufweist, sowie dessen Netzwerk-Adresse ermitteln kann. Beispielsweise kann dieser Teilnehmer eine Anfrage an einen Adress-Server starten, der an das Netzwerk (beispielsweise Internet) angeschlossen ist und bei den Teilnehmern, die Konvertierungsmodule aufweisen, sowie deren entsprechende Adressen abgelegt sind.

Alternativ oder zusätzlich kann zur Ermittlung eines genannten weiteren Teilnehmers eine Anfrage an einem Vermittlungsserver gestartet werden, dem die Teilnehmer bekannt sind, die Konvertierungsmodule aufweisen, und dem weiterhin deren Netzwerk-Adressen bekannt sind. Der Vermittlungsserver gibt als Antwort auf eine eingehende Anfrage von einem Teilnehmer eine eigene Anfrage über das Netzwerk aus. Das Ergebnis seiner eigenen Anfrage wird dann dem anfragenden Teilnehmer zurückgemeldet. Beispielsweise kann das Ergebnis der Anfrage das Einholen von Angeboten oder auch gleich eine Bestellung sein, wenn dies der zuerst anfragende Teilnehmer wünscht.

Das standardisierte Format kann insbesondere auf WDDX (Web Distributed Data Exchange) aufbauen, was ein Standard für die Datenübertragung zwischen verschiedenen Anwendungen auf XML-Basis ist und durch die Firma Allaire geschaffen wurde.

Das interne EDV-System kann mit einer internen und/oder externen Datenbank verbunden sein.

Gemäß einem weiteren Aspekt der vorliegenden Erfindung ist ein Software-Produkt vorgesehen, das in dem in einen Rechner in einer Netzwerkumgebung geladenen Zustand ein Verfahren der oben genannten Art implementiert.

Gemäß einem noch weiteren Aspekt der vorliegenden Erfindung ist ein Rechner in einer Netzwerkumgebung vorgesehen, der zur Ausführung eines solchen Verfahrens konfiguriert ist.

Schließlich ist ein grafische Bedienoberfläche vorgesehen, die die Ausführung eines Verfahrens nach der oben genannten Art ermöglicht.

Weitere Merkmale, Vorteile und Eigenschaften der vorliegenden werden aus der folgenden Beschreibung eines Ausführungsbeispiels und bezugnehmend auf die Figuren der beiliegenden Zeichnungen näher ersichtlich.
Figur 1 zeigt eine schematische Ansicht eines Systems zum standardisierten elektronischen Austausch von Geschäftsdaten über das Internet, und
Figur 2 zeigt den Anfrage/Angebotsabgabe-Zyklus, wie er durch eine Bestellung gemäß der erfindungsgemäßen Technik ausgelöst werden kann.

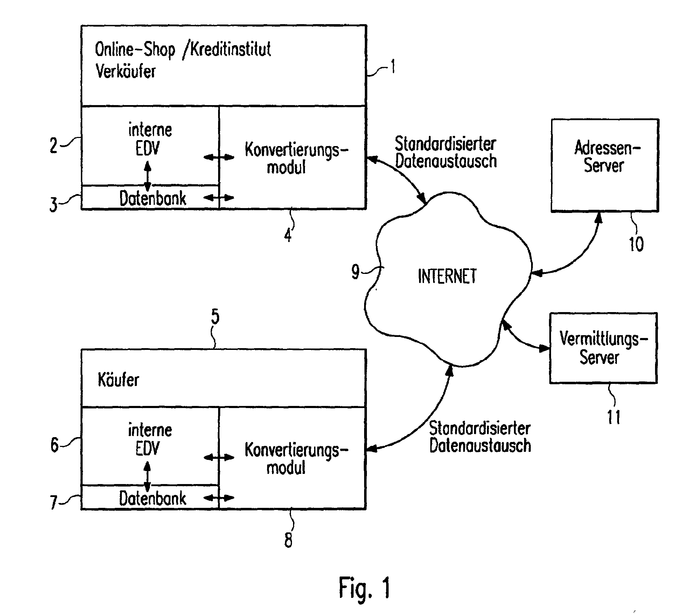

Bezugnehmend auf Figur 1 soll zuerst ein erfindungsgemäßes System zur standardisierten Übertragung von geschäftsrelevanten Daten elektronisch über das Internet erläutert werden. Mittels einem Netzwerk, wie beispielsweise dem Internet 9 ist wie dargestellt ein erster Teilnehmer, nämlich ein Online-Shop eines Verkäufers 1 mit einem weiteren Teilnehmer, nämlich einem Käufer 5 verbunden. Der erste Teilnehmer, nämlich der Verkäufer 1 weist wie üblich ein internes EDV-System 2 auf, das mit einer internen und/oder externen Datenbank 3 verbunden ist. Dementsprechend weist auch der zweite Teilnehmer, nämlich der (potentielle) Käufer 5 wie üblich ein internes EDV-System 6 auf, das mit einer internen und/oder externen Datenbank 7 verbunden ist. Das interne EDV-System 2 bzw. 6 kommuniziert wiegesagt einerseits mit der entsprechenden Datenbank 3 bzw. 7 und andererseits mit einem Konvertierungsmodul 4 bzw. 8. Das Konvertierungsmodul 4 bzw. 8 kann beispielsweise ein Zusatzmodul sein. Das Konvertierungsmodul 4 bzw. 8 setzt die Daten, die jeweils mit der zugeordneten internen EDV 2 bzw. 6 ausgetauscht werden, von der Plattform der internen EDV 2 bzw. 6 in einen Standard für den elektronischen Datenaustausch von geschäftsrelevanten Daten um. Die Kommunikation zwischen dem potentiellen Käufer 5 und dem Online-Shop des Verkäufers 1 und genauer gesagt zwischen den jeweiligen Konvertierungsmodulen 4 bzw. 8 erfolgt dann über das Netzwerk, nämlich insbesondere über das Internet 9. Weiterhin können an das Internet ein Adressenserver 10 und ein Vermittlungsserver 11 angeschlossen sein, die im übrigen nur zum Zwecke der Erläuterung getrennt dargestellt sind und in der Praxis einheitlich verwirklicht werden können. Die Funktion des Adressen-Servers 10 und des Vermittlungsservers 11 werden weiter unten im Detail erläutert.

Durch die erfindungsgemäße Technik können somit bestehende wie auch neue, interne und externe EDV-Lösungen über das Internet 9 verbunden werden. Informationen können somit nahtlos von jeder Person oder jedem Unternehmen zum jeweils nächsten beteiligten Teilnehmer (wiederum Person oder Unternehmen) weitergeleitet werden und dort sofort und vollautomatisch verarbeitet werden.

So wird zum Beispiel beim Kauf eines Produkts automatisch:
- das günstigste Angebot gesucht,
- die Lieferbereitschaft abgeklärt,
- die Bestellung aufgegeben,
- der Status der Bestellung durch den Käufer laufend überwacht,
- die Bestellung beim Verkäufer verarbeitet und das Produkt hergestellt,
- die günstigste Versandart für das gekaufte Produkt gesucht,
- das Produkt ausgeliefert,
- elektronische Lieferscheine erstellt und sowohl beim Käufer als auch beim Verkäufer im Lager erfaßt,
- die Rechnung erstellt und sowohl beim Käufer als auch beim Verkäufer in der Buchhaltung erfaßt,
- die fälligen Rechnungen an die Bank zur Zahlung übermittelt, und
- die eingegangenen Zahlungen von der Bank übermittelt und in der Buchhaltung erfaßt.

Neben dem Kauf/Verkauf von Produkten sind weitere Ausführungs- und Implementierungsmöglichkeiten für die vorliegende Erfindung denkbar: Reiseplanung inklusive Buchung von Flugzeugen, Hotels und Theateraufführungen und dergleichen, Depotverwaltung inklusive Börsentransaktionen, Adressverwaltung inklusive automatischer Adresskorrektur, Investitionsgüterverwaltung inklusive automatischer Unterhaltsplanung, usw.

Eine weitere vorteilhafte Anwendung eines Konvertierungsmoduls gemäß der vorliegenden Erfindung liegt in der Beurteilung der Kreditwürdigkeit beispielsweise von kleinen oder mittelgroßen Unternehmen (KMU) bei Kreditinstituten. Üblicherweise erfolgt die Prüfung der Kreditwürdigkeit von solchen Unternehmen durch Außendienstmitarbeiter, die dazu zuvor Informationen über die Kreditwürdigkeit der betreffenden kleinen oder mittelgroßen Unternehmen einholen müssen.

Durch die vorliegende Erfindung wird es möglich, Informationen, die für die Beurteilung der Kreditwürdigkeit seitens des Kreditinstituts wichtig sind, automatisch einzuholen, indem diese Informationen durch das Konvertierungsmodul in ein Paket standardisiert umgesetzt werden, das das Kreditinstitut zur automatischen Beurteilung der Kreditwürdigkeit auswerten kann. Das Ergebnis der automatischen Prüfung der Kreditwürdigkeit in dem EDV-System des Kreditinstituts kann eine Art Ampelschaltung sein, die dem Kreditinstitut automatisch die Kreditwürdigkeit des Antragstellers in drei verschiedenen Stufen anzeigt. Bei "Rot" oder "Grün" hat das EDV-System des Kreditinstituts automatisch eine eindeutige Antwort der Anfrage erstellt. Bei der Anzeige "Orange" hat die automatische Beurteilung der Kreditwürdigkeit durch das EDV-System des Kreditinstituts ergeben, daß automatisiert keine eindeutige Aussage über die Kreditwürdigkeit getroffen werden kann. Die Anzeige "Orange" bedeutet also, daß der Antragsteller durch einen Außendienstmitarbeiter nachgeprüft werden muß.

Eine weitere Anwendung der vorliegenden Erfindung ist die Lagerüberwachung, d.h. genauer gesagt die Überwachung des Lagers eines Kunden durch den Lieferanten. Durch das Konvertierungsmodul kann dem Lieferanten standardisiert in Paketen mitgeteilt werden, wann weitere Lieferungen an das Lager seines Kunden erfolgen müssen. Somit wird das Lager des Kunden automatisiert fortlaufend mit der notwendigen Ware versorgt. Der Kunde weist somit stets ein vollständiges oder entsprechend den Anforderungen gefülltes Lager auf. Weiterhin kann der Lieferant beispielsweise mittels des Konvertierungsmoduls bei seinem Kunden eine Statistik abrufen, die ihm mitteilt, wie lange die Vorrate voraussichtlich noch ausreichen, so daß der Lieferant wiederum selbst seine eigenen Nachbestellungen disponieren kann.

Eine noch weitere Anwendung der vorliegenden Erfindung betrifft das sogenannte "Supply-Change-Management" (Versorgungsketten-Management). Durch dieses Supply-Change-Management wird der Kreis zwischen einem Logistikunternehmer und einem Kleinverteiler geschlossen. Die meisten Hersteller liefern heutzutage ihre Produkte nur in großen Mengen (Bahnwaagen, Paletten, etc.) aus. Bei einer neuen Art der Warenverteilung übernehmen Logistikunternehmen die Feinverteilung für kleine oder mittelgroße Unternehmen (KMU). Bei Anwendung der vorliegenden Erfindung werden für den Fall, daß beispielsweise Internetbestellungen bei einem Online-Shop-Besitzer eingehen (mittels des Konvertierungsmoduls), gleichzeitig Aufträge an das Logistikunternehmen ausgelöst, die bestellte Ware ab Lager zu liefern. Das Logistikunternehmen hat also in diesem Fall die Lagerhaltung für den Kleinbetrieb übernommen. Die Faktoren Zeit und Lagerhaltung können somit auch bei kleinen Betrieben gelöst werden. Gemäß der vorliegenden Erfindung werden also bei diesem Anwendungsfall gleichzeitig mit dem Eingang eines Auftrags bei einem Online-Shop-Besitzer Bestellungen bei dem Logistikunternehmen ausgelöst, da Online-Shop und Lagerhaltung logistisch und geographisch voneinander getrennt sein können.

Da gemäß der vorliegenden Erfindung ein Standard für den Datenaustausch vereinbart wird, muß für jedes EDV-System nur einmal eine Verbindung zum Standard mittels eines Konvertierungsmoduls erstellt werden. Mit der standardisierten Verbindung kann dann die Person oder jedes Unternehmen, allgemein jeder Teilnehmer an dem Netzwerk, mit jeweils jedem weiteren Teilnehmer zusammenarbeiten. Dies ist insbesondere in einem vertretbaren Kostenrahmen realisierbar, so daß auch kleinere und mittlere Unternehmen der vollautomatisierte elektronische standardisierte Datenaustausch ermöglicht wird.

Selbstverständlich kann jeder Teilnehmer selbst entscheiden, auf welche Informationen seines internen Systems ein jeweils weiterer Teilnehmer zugreifen darf. Im Falle eines Verkäufers werden beispielsweise sämtliche Informationen, welche die Kunden betreffen, angeboten: Verkaufsartikel, Angebote, Bestellungen, Produktionsplanung, Lieferungen, Rechnungen, Verkaufsstatistik, etc. Selbstverständlich kann der anfragende Kunde (Käufer) immer nur auf entweder allgemein zugängliche (öffentliche) oder für ihn selbst betreffende Informationen zugreifen.

Die Ausführung des Konvertierungsmoduls 4 bzw. 8 in Form eines Zusatzmoduls macht eine Nachrüstung ohne eine komplette Umprogrammierung der betrieblichen EDV-Lösung möglich. Insbesondere kann das Zusatzmodul wie in Figur 1 gezeigt auch Informationen direkt mit jener Datenbank 3 bzw. 7 austauschen, auf die auch das interne EDV-System 2 bzw. 6 zugreift.

Durch eine intuitive grafische Oberfläche können dann die anzubietenden Informationen leicht ausgewählt und veröffentlicht werden.

Das Konvertierungsmodul 4 bzw. 8 ist wie ein Internet-Server konfiguriert und kann entsprechend adressiert werden. Die verschiedenartig in der Datenbank 3 bzw. 7 gespeicherten Informationen werden durch das Konvertierungsmodul 4 bzw. 8 in die standardisierte Form umgewandelt. Das Konvertierungsmodul 4 des Verkäufers 1 kann insbesondere eintreffende Aufträge entgegennehmen und sie an das innerbetriebliche EDV-System zur Weiterverarbeitung weitergeben.

Der Käufer 5 hat insbesondere zwei verschiedene Möglichkeiten, die beispielsweise von dem Verkäufer 1 angebotenen Informationen abzufragen:
In einer ersten Weise (Modus) können in einem separaten Programm ähnlich einem Internet Browser die abgefragten Informationen grafisch aufbereitet und nachgesehen werden. Indessen kann bei diesem Modus noch nicht das volle Potential der erfindungsgemäßen Technik ausgenützt werden, diese Betriebsweise erlaubt lediglich Teilnehmern die reduzierte Benutzung der Technik, ohne sich dem System vollständig anschließen zu müssen.
In der zweiten Betriebsart (Modus) kann mit einem Zusatzmodul (Konvertierungsmodul) zur betrieblichen EDV-Lösung des Käufers 5 die vom Verkäufer 1 angebotenen Informationen automatisch in die Datenbank 7 der vom Käufer 5 verwendeten betrieblichen EDV-Lösung gespeichert werden. Somit können beispielsweise sich wiederholende Warenbestellvorgänge optimiert werden. Bei dieser Möglichkeit wird natürlich sichergestellt, daß die in der betrieblichen EDV-Lösung 6, 7 des Käufers 5 vorgesehenen Sicherheitsmaßnahmen durch einen Zugriff über das Konvertierungsmodul 8 nicht umgangen werden können.

Bei einer vollen Integration der erfindungsgemäßen Technik in die betriebliche EDV-Lösung 6, 7 des Käufers 5 werden die Möglichkeiten voll ausgeschöpft: Erhält der Käufer wiederum einen Auftrag von einem seiner Kunden, so wird der Auftrag automatisch in System erfaßt, die Verfügbarkeit der Bestandteile und Produktionskapazitäten überprüft und der Auftrag ausgeführt. Kommt es zu Engpässen, so kann das Verhalten der EDV-Lösung beispielsweise von einem Hinweis an den Benutzer über das automatische Einholen von Angeboten bis zur direkten automatischen Nachbestellung bei den Lieferanten je nach Wunsch eingestellt werden. Der Benutzer kann sich in diesem Fall auf die Überwachung des Systems, die Betreuung der Kunden und auf die nichtautomatisierbaren Spezialfälle konzentrieren.

Der Käufer 5 kann Verkäufer 1, welche Informationen mittels eines Konvertierungsmoduls gemäß der vorliegenden Erfindung anbieten, auf mehrere Arten finden:
Gemäß einer ersten Alternative ist dem Käufer 5 die Netzwerkadresse des Verkäufers 1 bekannt und der Käufer kann somit die Netzwerk-Adresse des Verkäufers manuell im System erfassen.
Gemäß einer weiteren Alternative wird ein Adressen-Server 10 angefragt, der die Verkäufer 1 mit Konvertierungsmodulen gemäß der vorliegenden Erfindung einschließlich derer Netzwerkadressen und weiteren Informationen dem (potentiellen) Käufer 5 mitteilt.
Gemäß einer noch weiteren Alternative werden die Verkäufer 1 durch den (potentiellen) Käufer 5 nicht erfaßt. Für den Fall eines Kaufs wird der Auftrag an einen Vermittlungsserver 11 gesandt, der automatisch Angebote bei den Verkäufern 1 mit Konvertierungsmodulen 4 einholt und dann das günstigste Angebot dem Käufer 5 zurückmeldet und gegebenenfalls, falls vom Käufer 5 gewünscht, auch gleich bestellt.

Wie bereits mehrfach gesagt, ist ein wichtiger Bestandteil der vorliegenden Erfindung die Standardisierung der Informationen für den elektronischen Geschäftsverkehr. Somit haben alle Anbieter von betrieblichen EDV-Lösungen die Möglichkeit, die Erfindung in ihre Systeme zu integrieren.

Mit WDDX besteht bereits heute ein Standard für die einheitliche elektronische Speicherung einzelner Daten. Die Erfindung kann insoweit auf WDDX aufbauen und es mit der Definition zwingender und möglicher Datenfelder für einzelne Geschäftsprozesse, wie Angebotsanfrage, Bestellung, Lieferschein, Rechnung, etc. erweitern.

Im folgenden ist kurz eine Definition von Datenfeldern für einzelne Geschäftsprozesse dargelegt:
<Packet>
<header>
</header>
< data >
< var name= "Art_Nr">
< string > 087321
</var>
<var name = "Bezeichnung">
< string > Tisch
</var>
< var name = "Preis">
< string > 150 Euro
</var>
<var name = LZ">
< string > 10 Tage
</var>
</data>
</Packet>

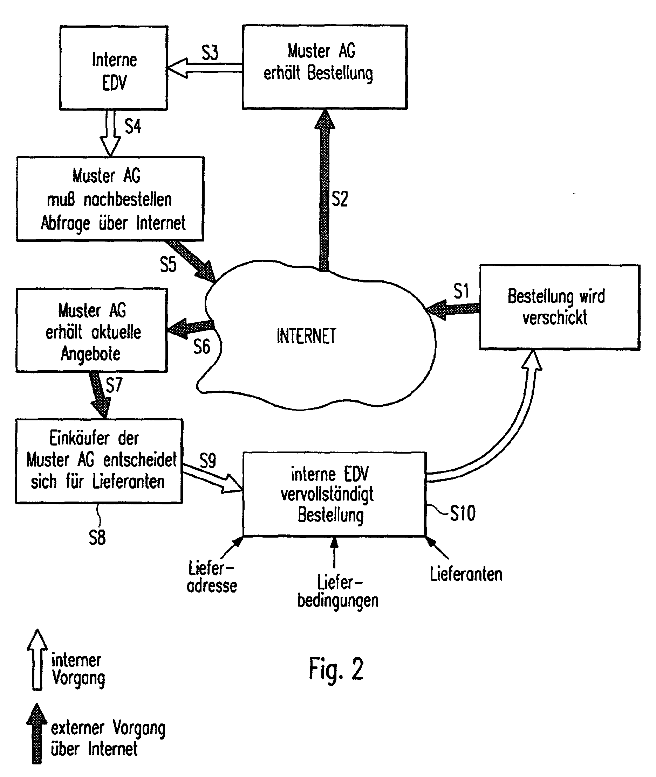

Bezugnehmend auf Figur 2 soll nochmals kurz ein erfindungsgemäßer Zyklus eines automatisierten Geschäftsablaufs erläutert werden.

In einem Schritt S1 wird eine Bestellung von einem potentiellen Käufer 5 über das Internet verschickt. Die Muster AG als Beispiel für einen Verkäufer erhält in einem Schritt S2 diese Bestellung über das Internet. Genauer gesagt nimmt das Konvertierungsmodul 4 des Verkäufers 1 diese Bestellung entgegen, setzt sie in das Format der internen EDV um und gibt sie an die interne EDV bzw. die interne/externe Datenbank weiter. Falls die interne EDV in einem Schritt S4 erkannt hat, daß die Bestellung gemäß Schritt S 1 nicht oder nur unzureichend erfüllt werden kann, da beispielsweise die Lagerbestände nicht ausreichen, gibt die Muster AG als Verkäufer selbst eine Anfrage in einem Schritt S5 über das Internet aus. In einem Schritt S6 erhält die Muster AG aktuelle Angebote von weiteren Teilnehmern, die Konvertierungsmodule aufweisen. Der Einkäufer der Muster AG kann sich dann für einen Lieferanten in einem Schritt S8 entscheiden. Dazu werden in einem Schritt S7 die aktuellen Angebote, die wiederum über das Konvertierungsmodul empfangen werden, an die interne EDV weitergegeben. In einem Schritt S9 werden die Daten des Lieferanten, für den sich der Einkäufer in dem Schritt S8 entschieden hat, an die interne EDV zur Vervollständigung beispielsweise mittels Lieferadressen, Lieferbedingungen und Lieferanten, die in der Datenbank 3 gespeichert sind, gegeben. Diese Bestellung wir dann mittels des Konvertierungsmoduls wiederum über das Internet verschickt, wodurch der Kreislauf geschlossen ist.

## Patentansprüche

1. Verfahren zum automatisierten Austausch von für den Geschäftsverkehr relevanten Daten zwischen einem ersten und einem zweiten Teilnehmer in einer Netzwerkumgebung (9),
aufweisend die folgenden Schritte:
- Ausgabe einer Anfrage durch ein internes EDV-System (6) des ersten Teilnehmers (5),
- Umsetzung der Anfrage in ein standardisiertes Format durch ein Konvertierungsmodul (8) des ersten Teilnehmers (5),
- Übertragung der Anfrage des ersten Teilnehmers (5) über das Netzwerk (9), in dem standardisierten Format
- Empfang der Anfrage durch ein Konvertierungsmodul (4) des zweiten Teilnehmers (1),
- Umsetzung der Anfrage von dem standardisierten Format in ein Format, das zur Weiterverarbeitung durch ein internes EDV-System (2) des zweiten Teilnehmers (1) geeignet ist, und
- Verarbeitung der Anfrage in dem internen EDV-System (2) des zweiten Teilnehmers (1).

2. Verfahren nach Anspruch 1,
dadurch gekennzeichnet,
daß für den Fall, daß das interne EDV-System (2) des zweiten Teilnehmers (1) feststellt, daß die Anfrage durch den zweiten Teilnehmer (1) nicht oder nur zum Teil erfüllt werden kann, das EDV-System (2) des zweiten Teilnehmers (1) automatisch eine weitere Anfrage mittels des Konvertierungsmoduls (4) des zweiten Teilnehmers (1) und dem Netzwerk (9) ausgibt.

3. Verfahren zur automatischen Beurteilung der Kreditwürdigkeit mittels einem Verfahren nach Anspruch 1,
dadurch gekennzeichnet,
daß der zweiten Teilnehmer ein Kreditinstitut und der erste Teilnehmer ein Kunde ist, der bei dem Kreditinstitut um einen Kredit nachfragt, wobei die Anfrage für eine automatische Beurteilung der Kreditwürdigkeit notwendigen Informationen in einem standardisierten Paket enthält.

4. Verfahren nach Anspruch 3,
dadurch gekennzeichnet,
daß die Beurteilung der Kreditwürdigkeit durch das EDV-System des Kreditinstituts automatisch anhand der Informationen in dem standardisierten Paket erfolgt.

5. Verfahren nach Anspruch 4,
dadurch gekennzeichnet,
daß für den Fall, daß die automatische Beurteilung ergibt, daß kein eindeutiger Fall vorliegt, eine Anzeige erfolgt, daß ein Mitarbeiter eingeschaltet werden muß..

6. Verfahren zum automatisierten Austausch von Daten zwischen einem anbietenden und einem abnehmenden Teilnehmer in einer Netzwerkumgebung,
aufweisend die folgenden Schritte:
- Ausgabe einer Angebots durch ein internes EDV-System (2) des anbietenden Teilnehmers (1),
- Umsetzung der Angebots in ein standardisiertes Format durch ein Konvertierungsmodul (4) des anbietenden Teilnehmers (1),
- Übertragung der Anfrage des anbietenden Teilnehmers (1) in dem standardisierten Format über das Netzwerk (9),
- Empfang des Angebots durch ein Konvertierungsmodul (8) des abnehmenden Teilnehmers (5).

7. Verfahren nach Anspruch 6, gekennzeichnet durch die weiteren, folgenden Schritte:
- Umsetzung des Angebots durch den abnehmenden Teilnehmer (5) von dem standardisierten Format in ein Format, das zur Weiterverarbeitung durch ein internes EDV-System (6) des abnehmenden Teilnehmers (5) geeignet ist, und
- Weiterverarbeitung und/oder Speicherung des Angebots in dem internen EDV-System (6) des abnehmenden Teilnehmers (5).

8. Verfahren nach einem der vorhergehenden Ansprüche,
dadurch gekennzeichnet,
daß der anbietende Teilnehmer (1) ein Online-Shop und das Netzwerk das Internet (9) ist.

9. Verfahren nach einem der vorhergehenden Ansprüche,
dadurch gekennzeichnet,
daß sämtliche zum Kauf eines Produkt jeweils durch das interne EDV-System benötigten Informationen automatisch ausgetauscht werden.

10. Verfahren nach einem der vorhergehenden Ansprüche,
dadurch gekennzeichnet,
daß das Konvertierungsmodul (4, 8) jeweils in der Art eines Internet-Servers konfiguriert und adressierbar ist.

11. Verfahren nach einem der vorhergehenden Ansprüche,
dadurch gekennzeichnet,
daß in einem ersten Modus die empfangenen Daten nur betrachtet, aber in dem internen EDV-System (2, 6) nicht weiterverarbeitet und/oder gespeichert werden können, und in einem zweiten Modus die empfangenen Daten in dem internen EDV-System (2, 6) weiterverarbeitet und/oder gespeichert werden können.

12. Verfahren nach einem der vorhergehenden Ansprüche,
dadurch gekennzeichnet,
daß ein Teilnehmer zur Ermittlung eines weiteren Teilnehmers, der ein Konvertierungsmodul aufweist, sowie dessen Netzwerk-Adresse den folgenden Schritt ausführt:
- Anfrage an einen Adress-Server (10), der an das Netzwerk (9) angeschlossen ist und Teilnehmer, die Konvertierungsmodule aufweisen sowie deren Adressen aufweist.

13. Verfahren nach einem der vorhergehenden Ansprüche,
dadurch gekennzeichnet,
daß ein Teilnehmer zur Ermittlung eines weiteren Teilnehmers, der ein Konvertierungsmodul aufweist, sowie dessen Netzwerk-Adresse den folgenden Schritt ausführt:
- Anfrage an einen Vermittlungsserver (11), dem die Teilnehmer sind, die Konvertierungsmodule aufweisen, sowie deren Netzwerk-Adressen bekannt sind, wobei der Vermittlungsserver als Antwort auf eine eingehende Anfrage von einem Teilnehmer eine eigene Anfrage über das Netzwerk (9) ausgibt und die das Ergebnis seiner eigenen Anfrage dem anfragenden Teilnehmer zurückmeldet.

14. Verfahren nach einem der vorhergehenden Ansprüche,
dadurch gekennzeichnet,
daß das standardisierte Format anwendungsabhängig definierte Datenfelder aufweist.

15. Verfahren nach Anspruch 14,
dadurch gekennzeichnet,
daß das standardisierte Format auf WDDX aufbaut und Erweiterungen durch Definition zwingender und optionaler Datenfelder für Geschäftsvorgänge aufweist.

16. Verfahren nach einem der vorhergehenden Ansprüche,
dadurch gekennzeichnet,
daß das interne EDV-System und/oder jeweils das zugeordnete Konvertierungsmodul mit einer internen und/oder externen Datenbank (3, 7) verbunden ist.

17. Software-Produkt,
dadurch gekennzeichnet
daß es in dem in eine Rechner in einer Netzwerkumgebung geladenen Zustand ein Verfahren nach einem der vorhergehenden Ansprüche implementiert.

18. Rechner in einer Netwerkumgebung,
dadurch gekennzeichnet,
daß er zur Ausführung eines Verfahrens nach einem der Ansprüche 1 bis 11 konfiguriert ist.

19. Graphische Benutzeroberfläche,
dadurch gekennzeichnet,
daß sie die Ausführung eines Verfahrens nach einem der Ansprüche 1 bis 11 ermöglicht.
